# EUROPÄISCHE PATENTANMELDUNG

(11) **EP 1 921 694 A1**
(43) Veröffentlichungstag der Anmeldung: **14.05.2008**
(21) Anmeldenummer: 07120173.5
(22) Anmeldetag: 07.11.2007
(51) Int. Cl.: H01M 2/04, H01M 2/26

(54) **Verbesserte Lithium-Ionen-Batterie vom Wickelzellentyp mit in Kunststoff eingebetteten Ableiterfixierungen bzw. -kontakten**

(30) Priorität: 08.11.2006 DE 102006035414
(71) Anmelder: Dilo Trading AG, 6300 Zug (CH)
(72) Erfinder: Rieck, Karsten, 99734 Nordhausen (DE); Theuerkauf, Stefan, 99734 Nordhausen (DE)
(74) Vertreter: TBK-Patent

(57) **Zusammenfassung**

Die Erfindung stellt eine verbesserte Lithium-lonen-Batterie vom Wickelzellentyp bereit, in welcher wenigstens an dem Teil der Stirnseite des Zellwickels, an dem der Ableiter aus der Stirnseite hervorragt, ein Kunststoffelement vorgesehen ist, um den Ableiter teilweise oder vollständig einzubetten.

## Beschreibung

### Technisches Gebiet

Die vorliegende Erfindung bezieht sich auf eine Lithium-lonen-Batterie vom Wickelzellentyp mit einer Fixierung und Stabilisierung der Kontaktierung des Ableiters an die Poldurchführung im Zellengehäuse einer Lithium-lonen-Zelle.

### Stand der Technik

Bei den üblichen Lithium-lonen-Batterien vom Wickelzellentyp werden die Ableiter, vorzugsweise in Form von Ableiterfähnchen, mit der Poldurchführung direkt kontaktiert. Hierfür wird ein Umbiegen der Ableiterfähnchen in Richtung der an der Stirnseite des Zellenwickels zentral angeordneten Poldurchführung erreicht. Dadurch entsteht eine elastische Verbindung der Ableiterfähnchen an die Poldurchführung, welche anschließend den Pol der Batterie ausbildet.
Bei einer Belastung einer herkömmlichen Lithium-lonen-Batterie durch Stoß, Schock oder Vibration können somit die an die Poldurchführung kontaktierten Fähnchen mitschwingen, so dass das Material mit der Zeit Ermüdungserscheinungen bekommt. Dies führt häufig zu einem Bruch oder zu einem Zerbröseln des Ableitermaterials.
Außerdem kann sich der Zellwickel durch die Beschleunigung in axialer Richtung hin und her bewegen, wobei er sich stirnseitig in die Poldurchführung drückt. Dies hat zur Folge, dass in dem Zellwickel ein Kurzschluss entstehen kann, es zu einer Dekontaktierung der Ableiterfähnchen kommen kann und somit zu einer Erhöhung des Innenwiderstandes bzw. zu einem Kurzschluss über das Zellengehäuses führen kann.

### Technische Aufgabe

Die vorliegende Erfindung richtet sich nun auf eine Verbesserung des Gesamtaufbaus der Lithium-lonen-Batterie vom Wickelzellentyp, um die vorstehenden Probleme von herkömmlichen Lithium-lonen-Batterien zu überkommen.

### Technische Lösung

Die vorstehend erwähnten Probleme werden erfindungsgemäß durch die Merkmale des Anspruch 1 gelöst. Weitere vorteilhafte Ausführungsformen der Erfindung sind aus den Unteransprüchen erkennbar.
Gemäß dem ersten Gesichtspunkt der Erfindung wird eine Lithium-Ionen-Batterie vom Wickelzellentyp bereitgestellt, die auf wenigstens einer der Stirnseiten des Zellwickels eine Poldurchführung umfasst, an welche der auf dieser Stirnseite aus dem Zellwickel hervorragende Ableiter kontaktiert ist, die dadurch gekennzeichnet ist, dass wenigstens der Teil der Stirnseite des Zellwickels, aus dem der Ableiter aus der Stirnseite hervorragt mit einem Kunststoffelement abgedeckt ist. Dies kann zu einer längeren Lebensdauer der Zelle, z.B. aufgrund einer Reduzierung von Kontaktierungsfehlern, führen.
Gemäß einem zweiten Gesichtspunkt der Erfindung wird eine Lithium-lonen-Batterien nach dem ersten Gesichtspunkt der Erfindung bereitgestellt, wobei der Ableiter teilweise oder vollständig in dem Kunststoffelement eingebettet ist, um Kontaktierungsfehler zu vermeiden.
Gemäß einem dritten Gesichtspunkt der Erfindung wird eine Lithium-lonen-Batterien nach einem der vorherigen Gesichtspunkte bereitgestellt, die dadurch gekennzeichnet ist, dass der an der Stirnfläche des Zellwickels hervorragende Ableiter aus einem oder mehreren Ableiterfähnchen ausgebildet ist. Die Kontaktierung über Ableiterfähnchen kann zu einer guten Kontaktierung bei gleichzeitiger verbesserter Effizienz des Herstellungsverfahrens führen.
Gemäß einem vierten Gesichtspunkt der Erfindung wird eine Lithium-lonen-Batterien nach einem der vorherigen Gesichtspunkte bereitgestellt, die dadurch gekennzeichnet ist, dass die Poldurchführung mit einem Ableiterkontaktierungselement versehen ist, welches sich auf der Stirnflächenseite des Zellwickels um die Poldurchführung erstreckt und mit dem Kunststoffelement verbunden ist. Dieses Ableiterkontaktierungselement erleichtert die feste und haltbare Kontaktierung der Ableiter(fähnchen) durch Verwendung gerader Kontaktierungsflächen. Somit kann es zur Verbesserung der Lebensdauer der Gesamtzelle beitragen.
Gemäß einem fünften Gesichtspunkt der Erfindung wird eine Lithium-lonen-Bafterien nach dem vierten Gesichtspunkt bereitgestellt, die dadurch gekennzeichnet ist, dass das Ableiterelement mit dem Kunststoffelement an der dem Zellwickel 1 gegenüberliegenden Seite bündig abschließt. Dieser bündige Abschluss kann nicht nur die Einhausung des fertigen Zellenelementes erleichtern, sondern kann die Beweglichkeit der Kontaktierungsstellen reduzieren. Diese geringere Beweglichkeit kann zu einer Vermeidung von Kurzschlüssen beitragen.
Gemäß einem sechsten Gesichtspunkt der Erfindung wird eine Lithium-lonen-Batterien nach einem der ersten drei Gesichtspunkte bereitgestellt, die dadurch gekennzeichnet ist, dass der Zellwickel, das Kunststoffelement 4 und das Ableiterkontaktelement zusammen eine zylinderförmige Einheit bilden, in die optional an den Bereichen ohne hervorragende Ableiterfähnchen das Kunststoffelement 4 nicht ausgebildet ist. Dadurch kann eine kompakte Gesamteinheit erzielt werden, die zu einer hohen Lebensdauer und zu weniger Versagensmechanismen führen kann.
Gemäß einem siebten Gesichtspunkt der Erfindung wird eine Lithium-lonen-Batterien nach einem der Gesichtspunkte drei bis sechs bereitgestellt, die dadurch gekennzeichnet ist, dass mehrere aus dem Zellwickel hervorragende Ableiterfähnchen zum Teil umgebogen und miteinander kontaktiert sind, wobei sie mit dem Ableiterkontaktierungselement seitlich in Kontakt stehen. Dies kann zu einer Reduzierung von Kontaktfehlern und zu einer Vermeidung von Kurzschlüssen führen, wodurch unter anderem auch eine gute Haltbarkeit der Zelle erreicht werden kann.

### Kurze Beschreibung der Abbildungen der Zeichnungen

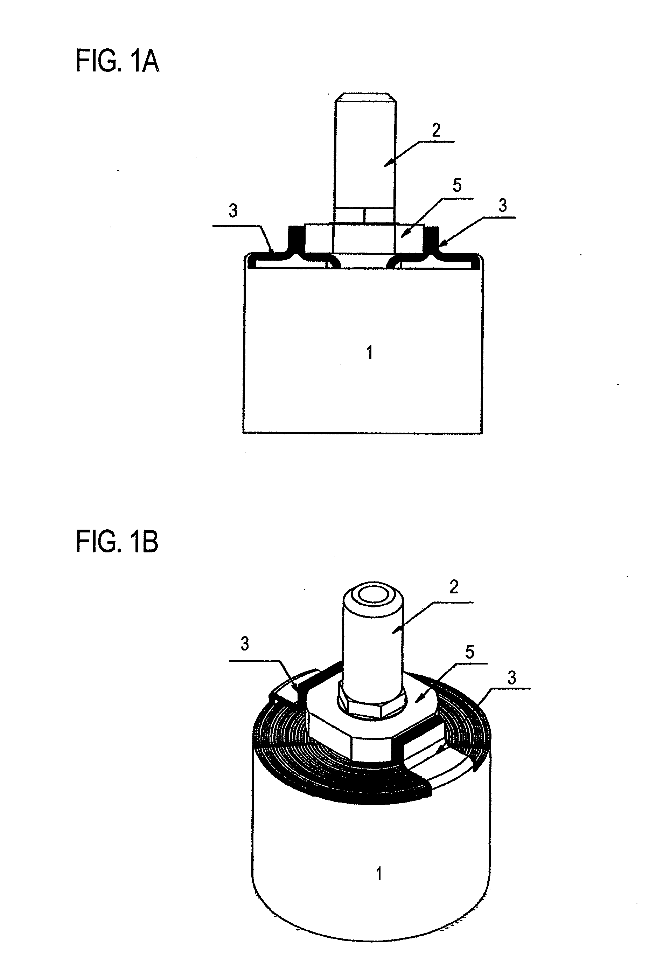

Die Figur 1A zeigt die Seitenansicht einer Lithium-lonen-Batterie vom Wickelzellentyp, welche auf der Stirnseite des Wickels eine zentrale Poldurchführung umfasst, an welche die auf dieser Stirnseite aus dem Zellwickel hervorragenden Ableiterfähnchen kontaktiert sind.
Figur 1B zeigt eine Draufsicht der in Figur 1A gezeigten kontaktierten Lithium-lonen-Batterie (ohne Kunststoffelement).

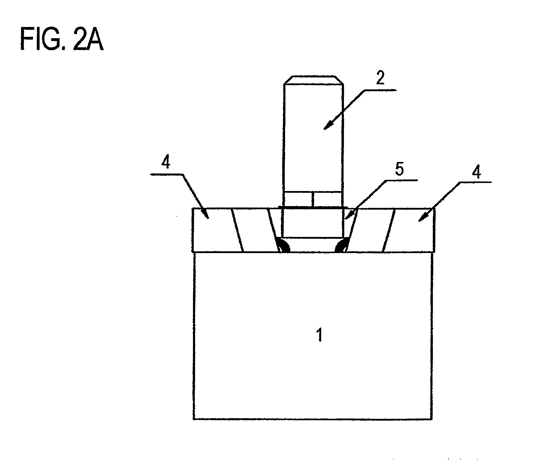

Die Figur 2A zeigt die Seitenansicht der in Figur 1A gezeigten kontaktierten Lithium-lonen-Batterie mit darauf aufgebrachtem Kunststoffelement 4.

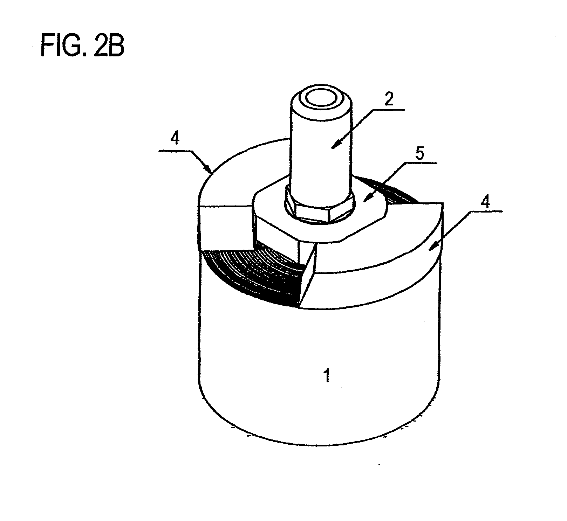

Die Figur 2B zeigt die Draufsicht der in Figur 2A gezeigten erfindungsgemäßen Lithium-lonen-Batterie.

### Weg(e) zur Ausführung der Erfindung

Der allgemeine Aufbau einer erfindungsgemäßen Lithium-lonen-Batterie umfasst einen Zellwickel 1, eine auf wenigstens einer der Stirnseiten des Zellwickels 1 angebrachte Poldurchführung 2 und auf der Stirnseite aus dem Zellwickel 1 hervorragende Ableiter 3. Der Ableiter 3 kann vorzugsweise auch aus einzelnen Ableiterfähnchen bestehen, die z.B. an gegenüberliegenden Positionen des Zellwickels ausgebildet sind. Diese Ableiterfähnchen 3 können für die Kontaktierung an die Poldurchführung leichter umgebogen werden, da sie nicht vollumfänglich aus dem Zellwickel hervorragen. Zur Sicherheit können mehrere Ableiterfähnchen 3 aus dem Zellwickel hervorragen. Somit werden leichter Kontaktierungsfehler verhindert.
In einer bevorzugten Ausführungsform kann die erfindungsgemäße Lithium-lonen-Batterie für eine bessere Kontaktierung der Ableiterfähnchen 3 an die, optional mittig angeordnete, Poldurchführung ein Ableiterkontaktierungselement 4 umfassen, welches um die zentral angeordnete Poldurchführung 2 vorgesehen ist und vorzugsweise gerade Kontaktierungsflächen an der Seite des Ableiterkontaktierungselements umfasst. Dadurch kann eine verbesserte Kontaktierung der gespreizten bzw. umgebogenen Ableiterfähnchen garantiert werden. Die Kontaktierung der Ableiterfähnchen an diese vorzugsweise ebenen Seitenflächen des Ableiterkontaktierungselements kann bevorzugt mittels Schweißens durchgeführt werden, wobei jedes bekannte Verfahren auch eingesetzt werden kann, solange es eine feste Kontaktierung ermöglicht. Ein bevorzugtes Verfahren hierfür ist zum Beispiel ein Ultraschallschweißverfahren bzw. ein Punktschweißverfahren.
Die Poldurchführung 2 der erfindungsgemäßen Lithium-lonen-Batterie dient nach der Einhausung des Zellwickels 1, des Ableiterkontaktierungselements 5, des Ableiters 3 und des Kunststoffelements 4 als ein Pol der Lithium-lonen-Batterie. Selbstverständlich können auf beiden Stirnseiten des Zellwickels eine erfindungsgemäße Fixierung und Kontaktierung des Ableiters durchgeführt werden.
Erfindungsgemäß wird ein Kunststoffelement 4 auf der Stirnseite des Zellwickels 1 an wenigstens dem Teil der Oberfläche des Zellwickels 1 vorgesehen, an welchem der Ableiter aus der Stirnseite des Zellwickels 1 hervorragt. Vorzugsweise wird der Ableiter 3 teilweise oder vollständig in das Kunststoffelement 4 eingebettet, nachdem er an die Poldurchführung 2 oder das Ableiterkontaktierungselement 4 kontaktiert wurden. Zum Einbetten des Ableiters oder der Ableiterfähnchen 3 in Kunststoff kann das Kunststoffelement 4 mittels eines entsprechenden Gießwerkzeugs gegossen werden, so dass die Stirnseite des Zellwickels inklusive der Ableiterfähnchen und dem unteren Teil der Poldurchführung zu einem bestimmten Teil oder vollständig mit Kunststoff ummantelt sind. Das Kunststoffelement 4 fixiert den Zellwickel 1 an die Poldurchführung 2, an welche der Ableiter 3 kontaktiert ist. So entsteht ein komplettes Gebinde, welches an den Stirnseiten am Zellengehäuse anliegt.
Weiterhin ist es bevorzugt, dass die Oberfläche des Kunststoffelements 4 und die Oberfläche des Ableiterkontaktierungselements 5 an der dem Zellwickel gegenüberliegenden Seite bündig abschließen. So können der Zellwickel 1, das Kunststoffelement 4 und das Ableiterkontaktierungselement 5 zusammen eine zylinderförmige Einheit bilden, welche dann zusammen als komplette Einheit eingehaust werden kann. Optional kann das Kunststoffelement 4 an den Bereichen, an denen der Ableiter 3 nicht aus dem Zellwickel hervorragt, nicht ausgebildet sein, um z.B. eine bessere Wärmeableitung zu gewährleisten.
Ein erfindungswesentliches Merkmal ist es, dass der Ableiter 3 bzw. die Ableiterfähnchen 3 mit der Poldurchführung 2 bzw. dem Ableiterkontaktierungselement 4 fest vergossen sind, so dass keine elastische Verbindung innerhalb der Zelle mehr vorliegt. Dieses Fixieren und Stabilisieren des Zellwickels mit den Ableiterfähnchen und der Poldurchführung im Zellengehäuse einer erfindungsgemäßen Lithium-lonen-Batterie führt zu einer Verbesserung der Kontaktierung des Ableiters mit der Poldurchführung. So kann ein besserer Kontakt zwischen dem Ableiter und der Poldurchführung bzw. dem Ableiterkontaktierungselement hergestellt werden, da keine elastische Verbindung innerhalb der Zelle mehr vorhanden ist. Auch kann sich der Zellwickel nicht mehr bei einem Stoß oder einem Schock in axialer Richtung in die Poldurchführung eindrücken.
Folglich kommt es zu einer deutlichen Reduzierung von Kurzschlüssen im Zellwickel und zu einer deutlichen Verringerung der Dekontaktierung der Ableiterfähnchen durch mechanische Einflüsse wie z.B. einem Stoß oder einer Vibration. Deshalb kann erfindungsgemäß eine deutliche Verringerung von Versagensmechanismen aufgrund von äußeren Belastungen der Batteriezellen erreicht werden. Insbesondere werden die Relativbewegungen durch Stoß, Schock und Vibrationen im Zellengehäuse auf ein Minimum reduziert. Ebenso treten Ermüdungserscheinungen des Ableitermaterials, wie ein Zerbröseln, in geringerem Maße auf.
Für die Materialien für das Kunststoffelement 4 ist es vorteilhaft, dass ein Kunststoff mit einer Schmelztemperatur von z.B. nicht unter 120°C eingesetzt wird, damit ein Schmelzen des Kunststoffelements aufgrund der Erwärmung der Zellen unter Belastung ausgeschlossen werden kann. Bevorzugt können Gießharze oder Reaktionsharze eingesetzt werden. Geeignete Beispiele solcher klassischer Gießharze bzw. Reaktionsharze finden sich im Kunststoff-Lexikon 9. Auflage, Karl Hanser Verlag München, S. 219 und 447.
Die Aushärtung kann z.B. thermisch oder durch UV und/oder Strahlungshärtung erfolgen (siehe auch Ullmann's Encyclopedia of Industrial Chemistry, Vol. 21, S. 398-453, VCH Verlag, Weinheim [1992]).
Als besonders geeignet haben sich ungesättigte Harz auf Basis von Polybutadienölen, Epoxy-Harzen und insbesondere Siliconharzen erwiesen. Beispiele hierfür finden sich in Ullmann's Encyclopedia of Industrial Chemistry, Vol. 24, S. 74-76 und deren Härtung S. 71-73 [1993].
Zusammenfassend kann gesagt werden, dass die vorliegende Erfindung eine verbesserte Lithium-lonen-Bafterie vom Wickelzellentyp bereitstellt, in welcher wenigstens an dem Teil der Stirnseite des Zellwickels, an dem der Ableiter aus der Stirnseite hervorragt, ein Kunststoffelement vorgesehen ist, um den Ableiter teilweise oder vollständig einzubetten. Die vorliegende Erfindung ist nicht auf Lithium-lonen-Batterien beschränkt, sondern kann auch in anderweitig eingesetzten elektrischen Zellen angewendet werden. Beispiel davon sind in der DE 10341355 A beschrieben, deren Offenbarung hiermit durch Bezugnahme vollständig mit aufgenommen wird.

## Patentansprüche

1. Lithium-lonen-Batterie vom Wickelzellentyp, die auf wenigstens einer der Stirnseiten des Zellwickels 1 eine Poldurchführung 2 umfasst, an welche der auf dieser Stirnseite aus dem Zellwickel 1 hervorragende Ableiter 3 kontaktiert ist, **dadurch gekennzeichnet, dass**
wenigstens der Teil der Stirnseite des Zellwickels 1, aus dem der Ableiter 3 aus der Stirnseite hervorragt mit einem Kunststoffelement 4 abgedeckt ist.

2. Lithium-lonen-Batterien nach Anspruch 1, wobei der Ableiter 3 teilweise oder vollständig in dem Kunststoffelement 4 eingebettet ist.

3. Lithium-lonen-Batterien nach Anspruch 1 oder 2, **dadurch gekennzeichnet, dass** der an der Stirnfläche des Zellwickels hervorragende Ableiter 3 aus einem oder mehreren Ableiterfähnchen 3 ausgebildet ist.

4. Lithium-lonen-Batterien nach einem der Ansprüche 1 bis 3, **dadurch gekennzeichnet, dass** die Poldurchführung 2 mit einem Ableiterkontaktierungselement 5 versehen ist, welches sich auf der Stirnflächenseite des Zellwickels 1 um die Poldurchführung 2 erstreckt und mit dem Kunststoffelement 4 verbunden ist.

5. Lithium-lonen-Batterien nach Anspruch 4, **dadurch gekennzeichnet, dass** das Ableiterelement 5 mit dem Kunststoffelement 4 an der dem Zellwickel 1 gegenüberliegenden Seite bündig abschließt.

6. Lithium-lonen-Batterien nach einem der Ansprüche 1 bis 3, **dadurch gekennzeichnet, dass** der Zellwickel 1, das Kunststoffelement 4 und das Ableiterkontaktelement 5 zusammen eine zylinderförmige Einheit bilden, in die optional an den Bereichen ohne hervorragende Ableiterfähnchen 3 das Kunststoffelement 4 nicht ausgebildet ist.

7. Lithium-lonen-Batterien nach einem der Ansprüche 3 bis 6, **dadurch gekennzeichnet, dass** mehrere aus dem Zellwickel 1 hervorragende Ableiterfähnchen 3 zum Teil umgebogen und miteinander kontaktiert sind, wobei sie mit dem Ableiterkontaktierungselement 5 seitlich in Kontakt stehen.
